# EUROPEAN PATENT APPLICATION

(11) **EP 4 553 681 A1**
(43) Date of publication of application: **14.05.2025**
(21) Application number: 23306922.8
(22) Date of filing: 07.11.2023
(51) Int. Cl.: G06F 21/00, G06Q 50/00, G06Q 10/02

(54) **DATA INTEGRITY IN BORDER SECURITY**

(71) Applicant: Amadeus S.A.S., 06410 Biot (FR)
(72) Inventor: MCKELL-REDWOOD, Colin, 89233 Neu-Ulm (DE); GNANASEKHARAN, Shankar, Iver, SL0 0HG (GB)
(74) Representative: Samson & Partner Patentanwälte mbB

(57) **Abstract**

Methods and systems of ensuring data integrity in border security are provided. The system of ensuring data integrity in border security comprises a travel authorization handling system, a travel provider reservation system, and a digital travel authorization provider. The three components interplay to create a strong link between a traveler and a government, thereby ensuring data integrity when applying for entry authorization to an area.

## Description

### FIELD

The present disclosure generally relates to data integrity, in particular, to a method, system, and computer program for ensuring data integrity in border security solutions.

### BACKGROUND

Border security solutions come into play in different scenarios when a person wants to enter a country or a region. The required steps in border security mostly depend on the nationality of the person and the requirements of the country for entering but may take many more aspects into account. In the past, the person went to the border staff at the border and handed over his/her passport and, if necessary, a visa obtained from the embassy for entering the country. The documents were checked and, depending on their correctness and validity, access was granted.

Although the basic procedure is still the same, times have changed. Worldwide travel is continuously increasing and people are arriving at borders in huge crowds, e.g., if a plane arrives at an airport, if a ship moors at a quay, or if an international intercity coach arrives at a first bus station in a country. Nowadays, the respective travel company or provider is required to check the documents of the traveler before the traveler enters the transportations means. This is to ensure that the traveler is allowed to enter the country of arrival and will neither be stranded at the place of arrival, have to return with the next transportations means, nor have to be placed in deportation detention.

However, these checks, which are required by the travel providers, as well as the data provided by a traveler for a visa application can be subject to errors and manipulation. For example, the traveler may provide false information for applying for a visa, show a fake visa to the travel provider, the data in the visa may not match the data on the travel documents or passport, data may be manipulated at transmission between the country and the travel provider, and so forth. Moreover, manual verifications at the airports, harbors, train or bus stations, etc., may be additionally needed, which leads to waste of time for entering the transportations means.

Therefore, improved methods for ensuring data integrity in border security are required.

### SUMMARY

In this context, methods, systems and computer program products are presented as defined by the independent claims.

As a first aspect, a computerized method of ensuring data integrity in border security is provided, which is executed by a travel authorization handling system. The method comprises receiving passenger reservation data relating to a trip of a traveler from a travel provider reservation system, wherein the trip comprises entering an area requiring entry authorization. The method further comprises, in response to receiving a request from a digital travel authorization provider, transmitting a subset of the passenger reservation data through a back-end secure channel to the digital travel authorization provider. The method further comprises receiving, via the back-end secure channel, an entry authorization approval status, an entry authorization application identifier, and an identity document number from the digital travel authorization provider, and providing the entry authorization approval status, the entry authorization application identifier, and the identity document number to the travel provider reservation system.

As a second aspect, a computer-implemented method of ensuring data integrity in border security is provided, which is executed by a travel provider reservation system. The method comprises, in response to a booking of a trip by a traveler, generating passenger reservation data for the trip, wherein the trip comprises entering an area requiring entry authorization. The method further comprises transmitting a notification to the traveler, wherein the notification comprises a link to a digital travel authorization provider in charge of handling entry authorization for the area, transmitting the passenger reservation data to a travel authorization handling system, receiving an entry authorization status, an entry authorization application identifier, and identity document number from the travel authorization handling system, and transmitting the entry authorization status and the entry authorization application identifier to the traveler.

As a third aspect, computer-implemented method of ensuring data integrity border security is provided, which is executed by a digital travel authorization provider. The method comprises, in response to a traveler requiring an entry authorization via a link provided by a travel provider reservation system, transmitting a request for a subset of passenger reservation data to a travel authorization handling system, wherein the passenger reservation data relates to a trip of a traveler, wherein the trip comprises entering an area requiring entry authorization. The method further comprises receiving the subset of passenger reservation data through a back-end secure channel from the travel authorization handling system, and providing, to the traveler, a form for requesting entry authorization, wherein the form comprises editable and non-editable sections, wherein the non-editable sections are prefilled with at least part of the subset of passenger reservation data. The method further comprises, in response to completing the form by the traveler, wherein completing the form comprises entering identity information by the traveler, generating an entry authorization approval status and an entry authorization application identifier of the traveler for the trip, and storing the subset of passenger reservation data and identification document information. The method further comprises transmitting the entry authorization approval status, the entry authorization application identifier, and an identity document number extracted from the identification document information to the travel authorization handling system.

As a fourth, fifth, and sixth aspect, a travel authorization handling system, a travel provider reservation system, and a digital travel authorization provider are provided that are configured to execute the methods as described herein.

As a seventh aspect, a system of ensuring data integrity in border security is provided that comprises a travel authorization handling system as described herein, a travel provider reservation system as described herein, and a digital travel authorization provider as described herein.

Finally, a computer program is presented that comprises instructions which, when the program is executed by a computer, cause the computer to carry out the methods described herein.

Further refinements are set forth by the dependent claims.

These and other objects, embodiments and advantages will become readily apparent to those skilled in the art from the following detailed description of the embodiments having reference to the attached figures, the disclosure not being limited to any particular embodiments.

### BRIEF DESCRITPTION OF THE DRAWINGS

The foregoing and further objects, features and advantages of the present subject matter will become apparent from the following description of exemplary embodiments with reference to the accompanying drawings, wherein like numerals are used to represent like elements, in which:
Fig. 1 depicts a schematic overview on the processes performed by a travel authorization handling system according to embodiments of the disclosure.
Fig. 2 depicts a schematic overview on the processes performed by a travel provider reservation system according to embodiments of the disclosure.
Fig. 3 depicts a schematic overview on the processes performed by a digital travel authorization provider according to embodiments of the disclosure.
Fig. 4 provides a comprehensive overview on the processes performed within the system of ensuring data integrity in border security according to embodiments of the disclosure.
Fig. 5 shows processes of an update of an entry authorization status according to embodiments of the disclosure.
Fig. 6 shows processes of an update of passenger reservation data according to embodiments of the disclosure.
Fig. 7 shows processes at check-in of a traveler according to embodiments of the disclosure.
Fig. 8 illustrates processes including a scannable code associated with the entry authorization application identifier according to embodiments of the disclosure.
Fig. 9 illustrates extraction of data from a scanned image according to embodiments of the disclosure.
Figs. 10 to 13 show user interfaces for supporting the embodiments of the disclosure.
Fig. 14 is diagrammatic representation of a computing system implementing the functionalities described herein.

### DETAILED DESCRIPTION

The present disclosure relates to methods and systems of ensuring data integrity in border security.

Since the world is currently recovering from a pandemic situation, managing high passenger growth and the trend to increased digital solutions is pushing the travel industry towards digital border solutions. The trend is directed towards digital travel portals (DTP) that collect in one place all the requirements for passenger entry to a region/country, such as health certificates, visa, or other factors. Accessed by mobile or internet, DTP's offer passengers a one stop shop for applying to travel into a country. On successful completion, passengers are offered their own personal travel authorization, which is independent of their way to reach the region/country.

Generally, there is also a change in travel authorization. In the past, some passengers used to have a right to travel based on nationality or residency and others had extra requirements to fulfil, such as applying for a visa. The difference is now that in a growing number of countries passengers have to secure an individual right to fly or otherwise enter the country, which may be received in the form of a personal digital travel authorization (DTA).

Currently, DTP's are largely stand stand-alone solutions and not linked to the travel providers but mainly only deliver the DTA to the travelers and a strong link between the DTPs and travel providers is missing. Hence, an improved system is proposed that links passengers and governments, delivers a single source of truth of the passenger's personal and travel data, is always up to date and linked to the specific travel, which enters the region/country of destination. A solution is provided herein.

In this disclosure, a system of ensuring data integrity in border security is described, in which three main components interplay, namely, a travel authorization handling system (TAHS) 1, a travel provider reservation system (TPRS) 2, and a digital travel authorization provider (DTAP) 3. The components may be implemented in one or more computing systems implemented in one or more servers of a server infrastructure or may be provided from the cloud, and may be connected through a wide area network, global network, the Internet, or similar network, which may be a public or a private network, and may include multiple interconnected networks as is known in the art. The connections may be based on a TCPT/IP protocol through the Internet, a LAN or any other suitable network, and may use one or more application programming interface. Although not shown in the following, the connections may also involve intermediate services platforms or servers handling the connection.

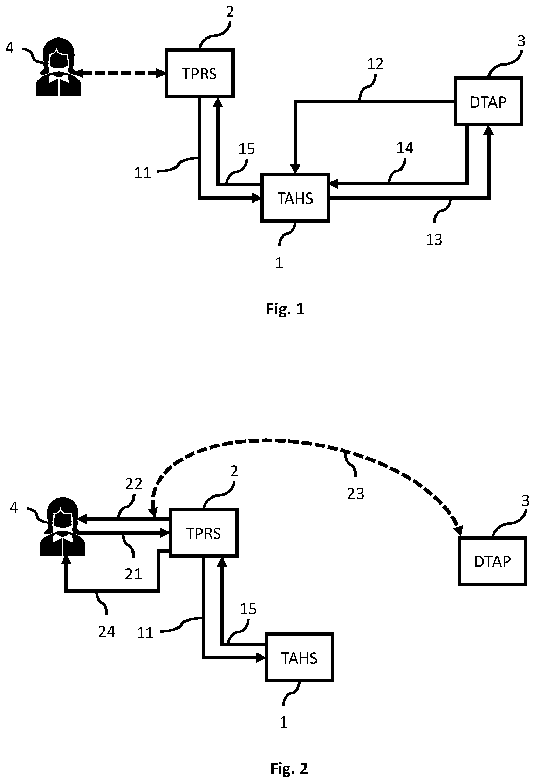

The three components can also be found in Figs. 1 to 7, which will be described in the following. Fig. 1 depicts a schematic overview on the processes performed by the travel authorization handling system (TAHS) 1 according to embodiments of the disclosure. The TAHS 1 is connected to the travel provider reservation system (TPRS) 2 and the digital travel authorization provider (DTAP) 3. A traveler 4 further interacts, as shown with the dashed line in Fig. 1, with the system via the TPRS 2, e.g., by booking a trip to an area or region. Area or region (used interchangeably) may refer to a country but also to a sub-region of a country, i.e., a state or the like. The TPRS 2 may provide at least one of flight connections, train connections, and bus connections to different countries.

After the booking of the trip by the traveler 4, the TAHS 1 receives (arrow 11) passenger reservation data relating to the trip of the traveler 4 from the TPRS 2, wherein the trip comprises entering an area requiring entry authorization. The area requiring entry authorization may be a country or state and the entry authorization may relate to a visa or similar entry authorization. For example, the area may require that a visitor generally applies for a visa or only visitors from specific countries.

The passenger reservation data may be sent to the TAHS 1 directly after the traveler 4 has booked the trip and has submitted his/her consent to share this data along with the booking. The TAHS 1 may then store the data for later use in a database. For data protection and data privacy reasons, it should be ensured that the traveler 4 first submits his/her consent to share the data before the data is transmitted to the TAHS 1. Moreover, it may also be required in the TPRS 2 that the transportation provider of the trip also submits its consent to share the data with the TAHS 1 and/or the TPRS 2 may also share the consent of the traveler 4 with the transportation provider, i.e., airline, train company, etc.

Alternatively, the passenger reservation data may be sent to the TAHS 1 in response to a request of the passenger to be authorized to enter the area, e.g., submitting a consent to share data for authorization or the like to the TPRS 2 or the DTAP 3. Passenger reservation data may refer to any data related to the trip. In some embodiments, passenger reservation data may comprise itinerary data relating to the trip and personal data of the traveler 4. Itinerary data may comprise data of the trip, such as date, time, origin, destination, and/or flight/bus/ship number. Personal data of the traveler 4 may comprise the first and last name(s), birth date and place, nationality, identity document (e.g., passport, identity card etc.) number, and/or other personal data.

The TAHS 1 further receives a request for passenger reservation data from the DTAP 3 (arrow 12). The request may comprise an identifier identifying the traveler 4, the trip, or the like. The reception of the passenger reservation data (arrow 11) may in some embodiments also occur after the request of the DTAP (arrow 12), that is, the request of arrow 12 may lead to a request of the TAHS 1 at the TPRS 2, which then transmits the passenger reservation data in arrow 11. The skilled person is thus aware that the processes described herein can also be reordered if required and transmissions may occur without any previous request or may only occur the receiving entity requests the respective data.

The TAHS 1 then transmits (arrow 13) a subset of the passenger reservation data through a back-end secure channel to the DTAP 3. A subset can be one information, e.g., only a booking number, but will preferably comprise more information, e.g., name of the traveler, booking number, origin, destination, flight/bus/ship number, or a combination thereof. A subset may also refer to the full passenger reservation data received from the TPRS 2. The back-end secure channel may transmit data securely using secure protocols such as HTTPS, SSL, or TLS. These protocols prevent eavesdropping, interception, and tampering with data in transit, which is important for ensuring data security in border solutions. Strong encryption algorithms and secure key management practices may further be applied to protect the sensitive data of the traveler 4.

The TAHS1 further receives (arrow 14), via the back-end secure channel, an entry authorization approval status, an entry authorization application identifier, and an identity document number from the DTAP 3. The entry approval status may relate to a status according to "approved", "pending", and "refused". The entry approval status may be encoded by a bitmap, as text or as any other suitable data structure. Usually, the first entry approval status received by the TAHS 1 will be a status of "pending", which means that the DTAP 3, possibly in connection with a government or other structure for granting access authorization to the area, is in the process of evaluating whether the traveler 4 is allowed to enter the area. The combination of the entry authorization approval status and the entry authorization application identifier may reflect a DTA.

The entry authorization application identifier is a unique reference number provided by the DTAP 3 that identifies the respective process of requesting entry authorization for the specific area. Moreover, the identity document number may be a passport number, an identity card number, or another number of an identity document, which is suitable for requesting entry authorization for the area. This identity document may be required to be uploaded by the traveler 4 when applying for travel authorization at the DTAP 3. In some embodiments, the identity document number received from the DTAP 3 may be compared with an identity document number received from the TPRS 2 within the personal data (in arrow 11) to ensure that the documents provided by the traveler 4 to the TPRS 2 and the DTAP 3 are consistent.

Finally, the TAHS 1 provides (arrow 15) the entry authorization approval status, the entry authorization application identifier, and the identity document number to the TPRS 2. By this procedure, the TAHS 1 provides a link between the TPRS 2 and the DTAP 3. The TPRS 2 will automatically know the entry approval status of the traveler 4, will have the official identity document number of the traveler 4 (i.e., which was provided to the DTAP 3 in behalf of the government (or the like) of the area of destination). Moreover, by linking travel authorization, i.e., the entry approval status, to the passenger reservation data, trusted, up to date, and actionable data is created. Fraud and entry errors are reduced since all processes are linked vie the TAHS 1 and digitalization replaces manual processes.

Fig. 2 depicts a schematic overview on the processes performed by the travel provider reservation system (TPRS) 2 according to embodiments of the disclosure. The TPRS 2 may provide at least one of reservations of flight, train, bus, and ship itineraries. This said, the TPRS 2 may provide airlines, bus, train, ship companies with a computer reservation system (CRS) and a booking backend. The traveler 4 connects to the TPRS 2 for booking of a trip (arrow 21). In response to the booking of the trip by the traveler 4, the TPRS 2 generates passenger reservation data for the trip, wherein the trip comprises entering an area requiring entry authorization. The passenger reservation data, which may comprise, e.g., a passenger name record (PNR), may be stored in one or more databases of the TPRS 2 but may also stored and handled externally, e.g., by a system associated with the TAHS 1 or another different system. The passenger reservation data may generally comprise itinerary data and personal data of the traveler. The passenger reservation data is at least in part communicated to the traveler 4, e.g., in a booking confirmation email to the traveler 4, in a travel application on a mobile device or personal computer of the traveler 4, or the like.

This communication may comprise a notification (arrow 22) to the traveler 4, wherein the notification comprises a link to the DTAP 3, which in charge of handling entry authorization for the area. The notification may inform the traveler 4 that entry authorization for entering an area, which is entered during the trip, is required. Alternatively, the notification (arrow 22) may also be transmitted separately from the passenger reservation data to the traveler 4 and be transmitted in a message, such as an email, SMS, social network message, and the like, or provided in a travel application, e.g., booking app of the TPRS 2.

Moreover, the TPRS 2 also transmits (arrow 11) the passenger reservation data to the TAHS 1. After the traveler 4 has clicked the link in the notification and completed the processes at the DTAP 3 (arrow 23), the TPRS 2 receives (arrow 15) an entry authorization status, an entry authorization application identifier, and identity document number from the TAHS1. As can be seen, the transmission of the passenger reservation data and the reception of the entry authorization status (etc.) is also reflected in Fig. 1, which is TAHS-centric, whereas Fig. 2 is TPRS-centric.

Finally, the TPRS 2 transmits the entry authorization status and the entry authorization application identifier to the traveler 4, e.g., via a message, such as an email, SMS, social network message, and the like, or provided in a travel application, e.g., booking app of the TPRS 2. Hence, the traveler 4 immediately knows the status of his/her entry approval status and the entry authorization application identifier in connection with the travel related information.

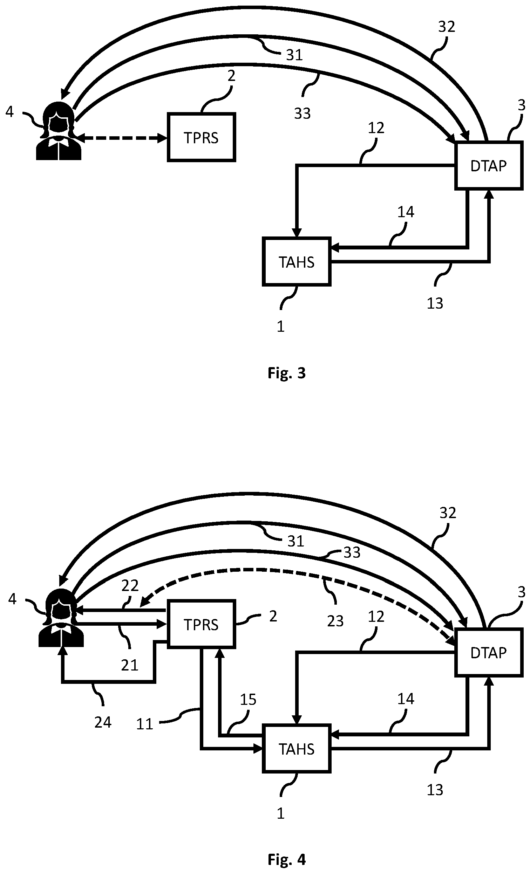

Fig. 3 depicts a schematic overview on the processes performed by a digital travel authorization provider (DTAP) 3 according to embodiments of the disclosure. Fig. 3 is a DTAP-centric view and comprises some processes also reflected by the TAHS-centric view of Fig. 1 as will be apparent in the following.

The traveler 4 is again in connection with the TPRS 2 and has booked a trip as depicted with the dashed arrow. The traveler 4 requires (arrow 31) entry authorization via a link provided by a TPRS 2 from the DTAP 3. In response to this request, the DTAP 3 transmits (arrow 12) a request for a subset of passenger reservation data to a TAHS 1, wherein the passenger reservation data relates to a trip of a traveler, wherein the trip comprises entering an area requiring entry authorization.

The DTAP 3 then receives (arrow 13) the subset of passenger reservation data through a back-end secure channel from the TAHS 1. The DTAP 3 processes the subset of passenger reservation data and provides (arrow 32) to the traveler 4 a form for requesting entry authorization, wherein the form comprises editable and non-editable sections, wherein the non-editable sections are prefilled with at least part of the subset of passenger reservation data. In other words, the information received from the TAHS 1, which is - as described with respect to Fig. 1 and 2 before - connected to the booking data entered by the traveler 4 at time of booking, is prefilled in the form and cannot be changed by the traveler 4.

For example, the traveler cannot change the name, the booking number, the origin, the destination, the flight number, and the like, i.e., data directly connected to the trip booking. The traveler 4 may, however, enter further data, such as payment data for paying for the entry authorization, personal data, such as place of birth, vaccination status, reasons for travel, criminal records, or the like and may upload a photo, an identification document, a vaccination document, or the like. The particular further data to be entered may usually be defined by the government of the destination country of the trip. By providing such prefilled fields, frauds and errors are significantly reduced. In particular, the data provided to the DTAP 3 and to the TPRS 2 are always in line, i.e., preventing a traveler from being denied to enter transportation means or to enter the areas at the border.

In response to completing the form (arrow 33) by the traveler 4, wherein completing the form comprises entering identity information by the traveler, the DTAP 3 generates an entry authorization approval status and an entry authorization application identifier of the traveler 4 for the trip. The entry approval status may relate to a status according to "approved", "pending", and "refused". The entry approval status may be encoded by a bitmap, as text or as any other suitable data structure. Usually, the first entry approval status created at the DTAP 3, possibly in connection with a government or other structure for granting access authorization to the area, is "pending", while the DTAP 3 being in the process of evaluating whether the traveler 4 is allowed to enter the area.

The DTAP 3 also stores (not shown in Fig. 3) the subset of passenger reservation data and identification document information, e.g., in order to provide updates to the TAHS 1 and to provide the border staff with the respective information if required. Finally, the DTAP 3 transmits (arrow 14) the entry authorization approval status, the entry authorization application identifier, and an identity document number extracted from the identification document information to the TAHS 1.

The identification document information may be information related to an identity document, such as a passport or identification card. This information may be extracted from a scan of the identity document provided by the traveler 4 to the DTAP 3, e.g., by text or image recognition algorithms. The identification document information may comprise an identity document number and at least one of a facial image of the traveler, a birth date, a birth place, an issuing date, and an issuing place of the identity document.

Fig. 4 provides a comprehensive overview on the processes performed within the system of ensuring data integrity in border security according to embodiments of the disclosure. The overall process is as follows (details can be taken from the description of Figs. 1 to 3):

| | |
|---|---|
| - Arrow 21: | A traveler 4 books trip at a TPRS 2. |
| - Arrow 22: | TPRS 2 confirms trip and sends notification to the traveler 4 that the trip requires entry authorization for at least one area. |
| - Arrow 23: | The notification comprises a link to a DTAP 3, which handles the entry authorization required for the trip. |
| - Arrow 11: | The TPRS 2 also provides passenger reservation data to a TAHS 1. It is noted that the process of arrow 11 may be done before arrow 22, after arrow 22, or in parallel with arrow 22, or may only be done after the DTAP 3 requests the passenger reservation data from the TAHS 1 in arrow 12, i.e., the TAHS requests the passenger reservation data from the TRPS 2 before the transmission of arrow 11 occurs. |
| - Arrow 31: | The traveler 4 clicks the link (of arrow 23) and requests entry authorization at the DTAP 3. |
| - Arrow 12: | The DTAP 3 request passenger reservation data from the TAHS 1. |
| - Arrow 13: | The TAHS 1 provides the passenger reservation data to the DTAP 3. |
| - Arrow 32: | The DTAP 3 provides a form with prefilled and editable parts to the traveler 4. |
| - Arrow 33: | The traveler 4 completes the form and requests entry authorization approval from the DTAP 3. |
| - Arrow 14: | The DTAP 3 processes the data and transmits an entry authorization approval status, an entry authorization application identifier, and an identity document number to the TAHS 1. |
| - Arrow 15: | The TAHS 1 then provides the entry authorization approval status, the entry authorization application identifier, and the identity document number to the TPRS 2. |
| - Arrow 24: | The TPRS 2 provides the entry authorization approval status and the entry authorization application identifier to the traveler 4. |

For example, the traveler 4 books, e.g., at a booking website a one-way or return ticket to a country that requires entry authorization. The booking website may be operated by the TPRS 2 but may also be a third-party website - but the booking is handled at the TPRS 2. In response to the booking, PNR data (trip reservation data with further personal data) is created. According to predefined rules, an event "authorization required" is identified, which triggers an email to the traveler 4 with a weblink to the DTAP 3. The traveler 4 should be advised about the data sharing to facilitate digital travel authorization in advance of the travel, i.e., the email or at least the website of the DTAP 3 requires content for data sharing. The link may already comprise data from the traveler 4, e.g., an email-address or name or the like.

In this example, the traveler 4 clicks on the weblink and the DTAP 3 prompts the traveler 4 to create a login or login if the traveler already has a credential. DTAP 3 interfaces with TAHS 1 to retrieve the booking details through an application programming interface (API), with defined input and output. DTAP 3 prompts the traveler 4 to scan their passport, upload a photo, enter further data, and the like. DATP 3 performs eligibility checks such as but not limited to the following: Is passport valid for travel? Is the traveler 4 a visa national? Is the traveler already in possession of a valid visa or resident permit? Is the traveler 4 exempted from visa (for example, diplomat)? Is the traveler 4 in transit?

If there is no need to create a visa application (in digital form, i.e., digital travel application), DTAP 3 interfaces with TAHS 1 to update that the traveler 4 is cleared for travel. If an application for travel authorization is needed, DTAP 3 prefills the information such as flight details, hotel details, duration of stay etc. in the application and prompts the traveler 4 to verify and complete remaining details such as declarations. The traveler 4 completes the application and payment in DTAP 3. If the application is automatically approved, DTAP 3 interfaces with TAHS 1 to update that the traveler is cleared for travel. If the application is flagged for manual review, DTAP 3 interfaces with TAHS 1 to update that the traveler's 4 application is pending approval. This information is then provided by TAHS 1 to TPRS 2.

It is understood by the skilled person that the processes described with respect to Fig. 4 saves time for traveler 4, saves costs for the transport providers (that are in connection with TPRS 2 and/or TAHS 1), increases security for countries that required entry approval, and the like. Generally speaking, adopting DTAP 3 solutions means travelers 4 receive personal authority to travel to the area. By linking DTAP 3 to the passenger reservation via TAHS 1, travel approval decisions are moved away from the transportation providers an, in particular, away from agents at the airports, ports, borders, and the like. Travelers 4 benefit from a convenient way to make sure all visa relevant data is supplied when going on a trip, border authorities mitigate their risk of unwanted entries even further and ahead of time, while participating airlines/train companies/bus companies/ship companies benefit from reduction in cost and liability. From the traveler's view: all visa applications, all provision of health/vaccine certificates will start at home, using nothing more than a smart phone (or personal computer). It is a one stop shop for reservation and travel authorization.

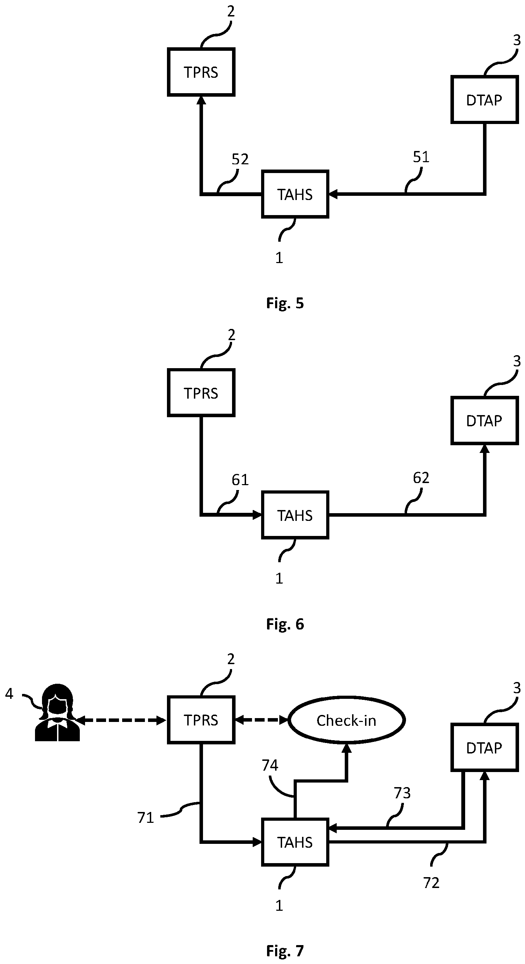

Fig. 5 shows processes of an update of an entry authorization status according to embodiments of the disclosure. It is apparent that an entry authorization status can be updated. For example, when a status is initially "pending", while the DTAP 3 (or the government in connection with the DTAP 3) processes application data from the traveler 4 to determine whether the traveler 4 is allowed to enter the country, the status may later change to "approved" or "refused".

The DTAP 3 does not contact the traveler 4 (at least not only the traveler 4) but contacts the TAHS 1. This means, the TAHS 1 receives (arrow 51) an updated entry authorization status accompanied with a subset of the passenger reservation data of the traveler from the DTAP 3, e.g., the status has changed to "approved". The TAHS 1 then provides (arrow 52) the updated entry authorization approval status to the TPRS 2, e.g., along with some data identifying the traveler 4, such as part of the passenger reservation data. The TPRS 2 may then provide the updated status to the traveler 4, e.g., by a notification (email, push message to application, or the like). Hence, the traveler 4 is informed in association with the relevant booking about the change of the entry authorization status and directly knows that he/she can fly.

It is noted that for multiple travelers 4 that have a combined booking, e.g., a family, friends, or the like, the DTAP 3 may provide the processes described herein either on a traveler level or on a booking level. The latter means that applications for entry authorizations have to be made for all travelers 4 that are included in a booking. This ensures that a group of travelers 4 can directly view whether they are all allowed to travel or not.

Fig. 6 shows processes of an update of passenger reservation data according to embodiments of the disclosure. It is apparent that also the passenger reservation data may change, e.g., a trip may be rebooked, i.e., dates or the place of destination may change. For example, the traveler 4 may book a trip to a country for August and later move the travelling date to October. In such cases, the TAHS 1 receives (arrow 61) an update of the passenger reservation data from the TPRS 2. The TAHS 1 then transmits (arrow 62) a subset of the updated passenger reservation data through the back-end secure channel to the DTAP 3 for updating the entry authorization of the traveler 4.

The DTAP 3 may then determine whether the updates passenger reservation data does change the entry authorization status. If so, the DTAP 3, the TAHS 1 and the TPRS 2 may act as shown in Fig. 5. Otherwise, the DTAP 3 has no need to do anything. In the example above, the identity document of the traveler 4 may only be valid until September. This means, travelling in October changes the entry authorization status and the DTAP 3 will update the TAHS 1 with the new status "refused".

Fig. 7 shows processes at check-in of the traveler 4 according to embodiments of the disclosure. At time of the traveler 4 requesting check-in for transportation means of the trip, e.g., via the app or website of the TPRS 2, the TAHS 1 receives (arrow 71) the passenger reservation data and the entry authorization application identifier from the TPRS 2. In some embodiments, the passenger reservation data may only be a subset of the overall passenger reservation data. The TAHS 1 is then capable of checking whether all information is still correct. Therefore, the TAHS 1 transmits (arrow 72) a request to the DTAP 3 comprising the entry authorization application identifier. The DTAP 3 returns the entry authorization approval status, i.e., the TAHS 1 receives (arrow 73) the entry authorization approval status of the traveler 4 from the DTAP 3.

In response to the entry authorization approval status being positive, e.g., "approved" or similar, the TAHS 1 enables (arrow 74) the check-in. Enabling the check-in may comprise simply informing the TPRS 2 about the allowance of check-in but may also comprise enabling check-in in a separate system that is linked to the TPRS 2. Such a system may be a system of the transportation providers, e.g., airlines, train companies, and the like, or still another system, e.g., of the airport, port, train station, or the like. The check-in system may be linked via APIs or software development kits (SDKs) to the application or website of the TPRS 2 or accessible via a weblink.

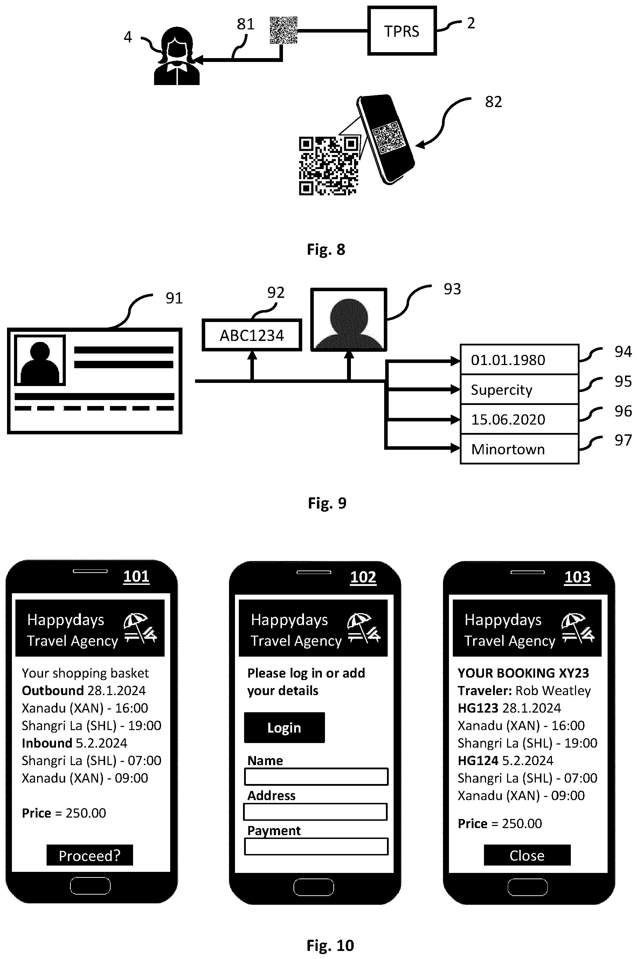

Fig. 8 illustrates processes including a scannable code associated with the entry authorization application identifier according to embodiments of the disclosure. In this example, the TPRS 2 transmits (arrow 81) a scannable code associated with the entry authorization application identifier to the traveler 4 (e.g., in addition to the entry authorization approval status and the entry authorization application identifier).

The scannable code is to be scanned (e.g., by a scanning device 82) before entering a transportation means to the area and/or at a border of the area. For example, the scannable code may be scanned at boarding a plane. In this example, in response to the scannable code indicating that the traveler 4 is allowed to board the plane because the entry authorization approval status is approved, an automatic gate may open and/or a display shown to boarding personnel may indicate the entry authorization approval status.

The scannable code may be a QR code or a barcode or a similar code that is scannable. The scannable code may be provided after successful check-in for entering the transportations means or entering the country. With the help of the scannable code, airline staff, ship's personnel, train conductors, or border staff can easily check the entry authorization approval status of a passenger. As the code may direct link the staff to the DTAP 3 information. Moreover, automatic gates may be used that only open when such a code is scanned. Hence, entry approval at borders or for entering transportation means can be automatized.

Fig. 9 illustrates extraction of data from a scanned image according to embodiments of the disclosure. The DTAP 3 receives a scanned image of an identity document 91, e.g., a passport, identity card, or any other suitable identity document, from the traveler 4. The extraction process then automatically extracts an identity document number 92, here "ABC123", and at least one of a facial image 93 of the traveler 4, a birth date 94, here "01.01.1980", abirth place 95, here "Supercity", an issuing date 96, here " 15.06.2020", and an issuing place 97, here "Minortown", from the scanned image. The extraction process may also extract a validity date of the identity document or calculate the validity date of the identity document based on the issuing date 96.

The extraction process may generally be based on object detection, with the objects being facial image and text. Moreover, it may be predefined where to find the respective relevant texts and image on the identity document 91. Optical character recognition (OCR) may be used to extract the letters of the text. The extracted data may not be editable by the traveler 6, when completing the form at the DTAP 3. In contrast to systems that allow the traveler 4 to enter the identity data in a form, this automatic extraction system ensures that less fraud and errors occur.

Particular security advantages for the border guards and countries that apply the systems described herein are, e.g., that only validated information about passenger and booking is received as the information is synchronized between DTAP 3, TAHS 1, and TPRS 2. The information is further received early, i.e., at the time of booking or at least before check in or departure. The countries are further fully informed as the information received may cover whole booking information, e.g., arrive/depart/hotel booked/passport details, and the like. The data is validated as at least some data is taken directly from passport and reservation, which limits fraud opportunities. Moreover, data is updated automatically, i.e., the entry approval is always valid.

Further advantages for the border guards and countries are, e.g., customizable data flow (authorities can specify the data required, i.e., not limited to standards of airlines, train companies etc.), accurate data (using actual passport, booking and email addresses used for reservation as single source of the truth, which reduces manual entry and fraud opportunity), easier control arrivals (stop illegal passengers, passenger are only able to fly/travel once all requirements complied with, any passenger directly blocked from checking-in or boarding by governments), overstay alerts possible, faster at border control as automatized processes (reduces queues, reduces space required for checks), application to travel completed before travel (complex issues can be reviewed offline before travel at leisure by team of experts, do not need to provide complex training and support to every agent at borders), improved permission to enter (only passport etc. is needed is to verify identity, visa information is in system or provided through scannable code, agents do not need to make complex decisions in an average of 45 seconds), only pre-authorized travelers will arrive (only simple passport etc. verification required by agent, i.e., much greater throughput, less queues), access can be integrated into automatic gate solutions (all nationals could use these gates), could be used with biometric solutions to speed things even more, offline decision making helps balance peaks and troughs of arrivals, and reduces need for biometric face capture on arrival by immigration.

Advantages for travelers are, e.g., individual authorization (i.e., security of knowing that all doc checks are completed before travel), assurance that all visas/health certificates/passports are valid for travel (according to individual authorization provided by government authority via DTAP 3), convenient to apply for visa/travel authorization from home without time pressure, much better arrival experience for tourists and businessmen, reduced time spent in queues, only simple identity and border patrol checks, and all issues addressed before travel (reduces chance of being ineligible to fly).

Particular advantages for the transportation providers are, e.g., that they only need to check a traveler's identity against reservation data, that many checks, such as for visa, health, security etc., are all eliminated from their responsibility, either before travel or at departing airport, port, station etc., that the liability is reduced (inadmissible passengers are identified beforehand, i.e., transportation provider's obligation is only to verify identity). Further advantages are automation by using automatic gates and linking the processes to biometric checks.

Figs. 10 to 13 show user interfaces for supporting the embodiments of the disclosure. In Fig. 10, the first user interface 101 shows the user interface, e.g., provided by TPRS 2, for booking a trip on 28 January 2024 from Xanadu with the International Air Transport Association (IATA) code XAN to Shangri La with the IATA code SHL. Departure time is 4 p.m. and arrival time is 7 p.m. The return flight is on 05 February 2024 with departure time 7 a.m. and arrival time 9 a.m. The price is 250 Dollar. The traveler 4 may then click the proceed button at the bottom for booking.

In the next user interface 102, the traveler 4 can login via clicking the login button if the traveler 4 already has an account, or add detail manually. Details may comprise name, address, payment details as well as passport details (not shown). After completing the input of all details, the next user interface 103 may be shown with is an overview of the booking with the same details as shown in the first interface 101 as well as the booking number XY23 and the flight numbers HG123 and HG124.

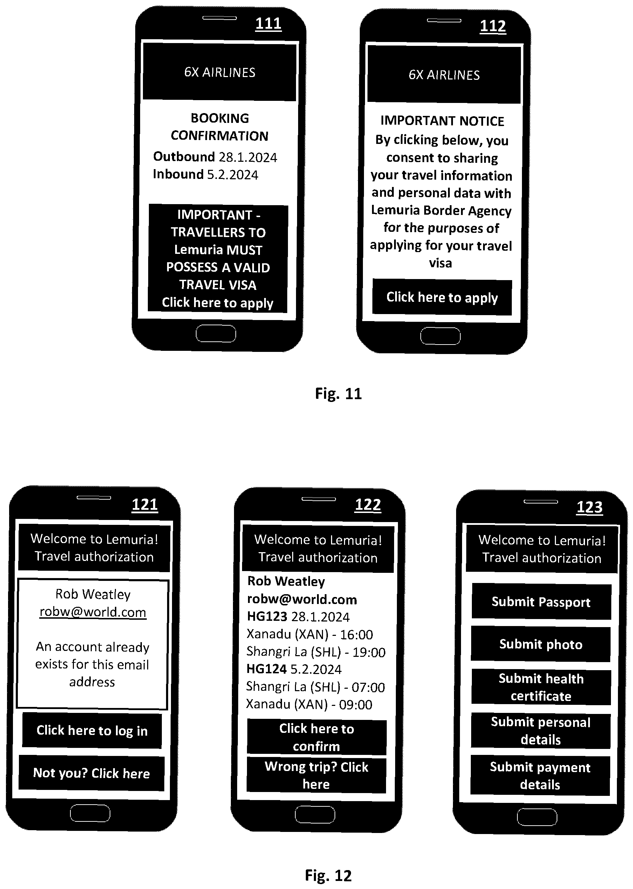

In Fig. 11, the first user interface 111 is an example of a notification received from the airline 6X of the flight. The notification may be provided via TPRS 2, via an email or via the app shown in Fig. 10. The notification informs the traveler 4 about the need of a travel visa for the trip to Shangri La in the country of Lemuria. When the traveler 4 clicks the button at the bottom, the traveler 4 may be directed to another webpage or user interface, such as the user interface 112. The traveler 4 is informed that personal data is shared with the Lemuria border agency if the traveler now clicks the button at the bottom, which leads the traveler 4 via a link to the DTAP 3.

In Fig. 12, the first user interface 121 is an example of the user interface provided by the DTAP 3 in behalf of Lemuria. The traveler 4, who is Rob Weately, is already identified as well as his email address robw@world.com. In this example, the traveler 4 already has an account at the DTAP 3. This account may be specific for Lemuria but may also be a general account at the DTAP 3 for different countries. The traveler 4 can log in (first button) or choose another account or create an account (second button). In this example, the traveler 4 logs in and will be presented with the second user interface 122. The details of the flights will automatically be loaded in the form and will not be changeable. The details come from the TAHS 1 as described before. The traveler 4 can confirm the details (first button) or select another trip (second button), e.g., if he has more than one trip to Lemuria. The data of a second trip may also be provided by TAHS 1.

If traveler 4 confirms the details of the trip, he will be presented with the third user interface 123. Here, he must submit the passport (first button, which may lead to other user interfaces providing the possibility to upload the passport), i.e., take a photo of the passport and submit it or scan the passport or the like. Moreover, a current photo is also required, which may by taken by the camera of the mobile phone (second button, which may also lead to other user interfaces). The traveler 4 must, in this example, also submit a health certificate (third button, also possibly leading to further user interfaces), e.g., scanning a code of the health certificate or the like. Additionally, personal details are also required (fourth button, which also leads to further user interfaces, e.g., showing a form, in which the details can be entered). The personal details may comprise reason for travelling, criminality records, and such. Finally, the traveler 4 is also prompted to submit payment details (last button, again possibly leading to further user interfaces).

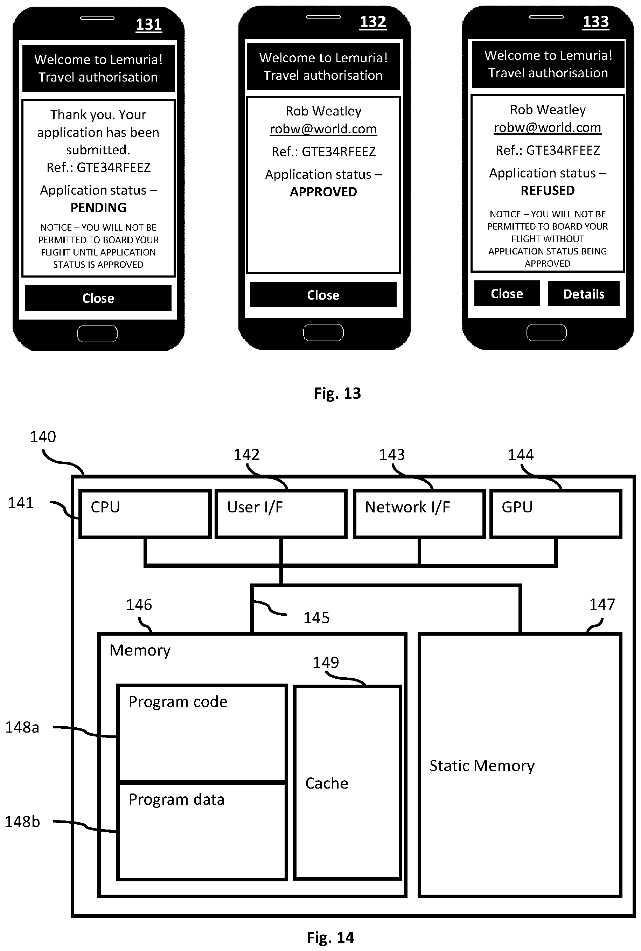

When the traveler 4 has submitted all details required, the first user interface 131 of Fig. 13 may be shown. The user interface 131 may be integrated in the application of the TPRS 2 and shows the entry authorization application identifier "GTE34RFEEZ" and the entry authorization approval status "PENDING". Furthermore, also a notice is shown that the traveler 4 will not be able to board the flight if the status is not approved. User interface 132 shows an update of the application status, i.e., the entry authorization approval status, which is now "APPROVED". Hence, when the traveler 4 receives this update, e.g., via the application of the TRPS 2, the traveler 4 knows that he is allowed to fly. User interface 133 shows an example user interface, when the update of the entry authorization approval status is "REFUSED". In this case, the traveler 4 may obtain details so that he can reapply for entry approval or submit further documents.

It is apparent to the skilled person that modifications of the user interfaces as shown in Figs. 10 to 13 can be made if required to support the functionalities as described herein. All presented user interfaces may be hosted by one application provided by the TPRS 2 or may be distributed. The user interfaces may also not only be provided at a mobile device but also at a personal computer or the like.

Fig. 14 is a diagrammatic representation of internal components of a computing system 140 implementing the functionality as described herein. The computing system 140 includes at least one processor 141, a user interface 142, a network interface 143 and a main memory 146, that communicate with each other via a bus 145. Optionally, the computing system 140 may further include a static memory 147 and a disk-drive unit (not shown) that also communicate with each via the bus 145. A video display, an alpha-numeric input device and a cursor control device may be provided as examples of user interface 142. Furthermore, the computing system 140 may also comprise one or more graphics processing units (GPU) 144.

The GPUs 144 may also comprise a plurality of GPU cores or streaming multiprocessors, which comprise many different components, such as at least one register, at least one cache and/or shared memory, and a plurality of ALUs, FPUs, tensor processing unit (TPU) or tensor cores, and/or other optional processing units. GPUs can perform multiple simultaneous computations, thereby enabling the distributing of training processes and speeding up machine learning operations.

The main memory 146 may be a random-access memory (RAM) and/or any further volatile memory. The main memory 146 may store program code 148a and may also store additional program data 148 required for providing the functionalities described herein. Moreover, the main memory 146 may also include a cache 149.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, processes, operations, elements, and/or components, but do not preclude the presence or addition of one or more other features, integers, processes, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computer-implemented method of ensuring data integrity in border security, the method being executed by a travel authorization handling system comprising:
receiving passenger reservation data relating to a trip of a traveler from a travel provider reservation system, wherein the trip comprises entering an area requiring entry authorization;
in response to receiving a request from a digital travel authorization provider, transmitting a subset of the passenger reservation data through a back-end secure channel to the digital travel authorization provider;
receiving, via the back-end secure channel, an entry authorization approval status, an entry authorization application identifier, and an identity document number from the digital travel authorization provider; and
providing the entry authorization approval status, the entry authorization application identifier, and the identity document number to the travel provider reservation system.

2. The method of claim 1 further comprising:
receiving an updated entry authorization status accompanied with a subset of the passenger reservation data of the traveler from the digital travel authorization provider; and
providing the updated entry authorization approval status to the travel provider reservation system.

3. The method of claim 1 or claim 2, in response to receiving an update of the passenger reservation data from the travel provider reservation system, further comprising:
transmitting a subset of the updated passenger reservation data through the back-end secure channel to the digital travel authorization provider for updating the entry authorization of the traveler to the area.

4. The method of any of the preceding claims, at time of the traveler requesting check-in for transportation means of the trip, further comprising:
receiving the passenger reservation data and the entry authorization application identifier from the travel provider reservation system;
transmitting a request to the digital travel authorization provider comprising the entry authorization application identifier;
receiving an entry authorization approval status of the traveler from the digital travel authorization provider; and
in response to the entry authorization approval status being positive, enabling the check-in.

5. The method of any of the preceding claims, wherein passenger reservation data comprises itinerary data and personal data of the traveler.

6. The method of any of the preceding claims, wherein the travel provider reservation system provides at least one of flight connections, train connections, and bus connections.

7. A computer-implemented method of ensuring data integrity in border security, the method being executed by a travel provider reservation system, comprising:
in response to a booking of a trip by a traveler, generating passenger reservation data for the trip, wherein the trip comprises entering an area requiring entry authorization;
transmitting a notification to the traveler, wherein the notification comprises a link to a digital travel authorization provider in charge of handling entry authorization for the area;
transmitting the passenger reservation data to a travel authorization handling system;
receiving an entry authorization status, an entry authorization application identifier, and identity document number from the travel authorization handling system; and
transmitting the entry authorization status and the entry authorization application identifier to the traveler.

8. The method of claim 7 further comprising transmitting a scannable code associated with the entry authorization application identifier to the traveler, wherein the scannable code is to be scanned before entering a transportation means to the area and/or at a border of the area.

9. A computer-implemented method of ensuring data integrity border security, the method being executed by a digital travel authorization provider, comprising:
in response to a traveler requiring an entry authorization via a link provided by a travel provider reservation system, transmitting a request for a subset of passenger reservation data to a travel authorization handling system, wherein the passenger reservation data relates to a trip of a traveler, wherein the trip comprises entering an area requiring entry authorization;
receiving the subset of passenger reservation data through a back-end secure channel from the travel authorization handling system;
providing, to the traveler, a form for requesting entry authorization, wherein the form comprises editable and non-editable sections, wherein the non-editable sections are prefilled with at least part of the subset of passenger reservation data;
in response to completing the form by the traveler, wherein completing the form comprises entering identity information by the traveler:
- generating an entry authorization approval status and an entry authorization application identifier of the traveler for the trip; and
- storing the subset of passenger reservation data and identification document information; and
transmitting the entry authorization approval status, an entry authorization application identifier, and an identity document number extracted from the identification document information to the travel authorization handling system.

10. The method of claim 9, wherein entering identification document information comprises:
receiving a scanned image of an identity document from the traveler; and
extracting an identity document number and at least one of a facial image of the traveler, a birth date, a birth place, an issuing date, and an issuing place from the scanned image.

11. A travel authorization handling system configured to:
receive passenger reservation data relating to a trip of a traveler from a travel provider reservation system, wherein the trip comprises entering an area requiring entry authorization;
in response to receiving a request from a digital travel authorization provider, transmit a subset of the passenger reservation data through a back-end secure channel to the digital travel authorization provider;
receive, via the back-end secure channel, an entry authorization approval status, an entry authorization application identifier, and an identity document number from the digital travel authorization provider; and
provide the entry authorization approval status, the entry authorization application identifier, and the identity document number to the travel provider reservation system.

12. A travel provider reservation system configured to:
in response to a booking of a trip by a traveler, generate passenger reservation data for the trip, wherein the trip comprises entering an area requiring entry authorization;
transmit a notification to the traveler, wherein the notification comprises a link to a digital travel authorization provider in charge of handling entry authorization for the area;
transmit the passenger reservation data to a travel authorization handling system;
receive an entry authorization status, an entry authorization application identifier, and identity document number from the travel authorization handling system; and
transmit the entry authorization status and the entry authorization application identifier to the traveler.

13. A digital travel authorization provider configured to:
in response to a traveler requiring an entry authorization via a link provided by a travel provider reservation system, transmit a request for a subset of passenger reservation data to a travel authorization handling system, wherein the passenger reservation data relates to a trip of a traveler, wherein the trip comprises entering an area requiring entry authorization;
receive the subset of passenger reservation data through a back-end secure channel from the travel authorization handling system;
provide, to the traveler, a form for requesting entry authorization, wherein the form comprises editable and non-editable sections, wherein the non-editable sections are prefilled with at least part of the subset of passenger reservation data;
in response to completing the form by the traveler, wherein completing the form comprises entering identity information by the traveler:
- generate an entry authorization approval status and an entry authorization application identifier of the traveler for the trip; and
- store the subset of passenger reservation data and identification document information; and
transmit the entry authorization approval status, an entry authorization application identifier, and an identity document number extracted from the identification document information to the travel authorization handling system.

14. A system of ensuring data integrity in border security comprising:
a travel authorization handling system according to claim 11;
a travel provider reservation system according to claim 12; and
a digital travel authorization provider according to claim 13.

15. A computer program product comprising program code instructions stored on at least one computer readable medium to execute the method steps according to any one of claims 1 to 10, when said program code instructions are executed on a computer.
